# EUROPÄISCHE PATENTSCHRIFT

(11) **EP 2 901 225 B1**
(45) Veröffentlichungstag und Bekanntmachung des Hinweises auf die Patenterteilung: **21.08.2019**
(21) Anmeldenummer: 13766486.8
(22) Anmeldetag: 13.09.2013
(51) Int. Cl.: G05B 19/409, A47J 31/00

(54) **BEDIENSYSTEM FÜR EINE GETRÄNKEVERARBEITUNGSMASCHINE**
OPERATOR SYSTEM FOR A MACHINE FOR PROCESSING BEVERAGES
SYSTÈME DE COMMANDE POUR UNE MACHINE DE TRAITEMENT DE BOISSONS

(30) Priorität: 27.09.2012 DE 102012217573
(43) Veröffentlichungstag der Anmeldung: 05.08.2015
(73) Patentinhaber: Krones AG, 93073 Neutraubling (DE)
(72) Erfinder: HAHN, Wolfgang, 93073 Neutraubling (DE); PRONOLD, Timo, 93073 Neutraubling (DE); BÖHM, Johannes, 93073 Neutraubling (DE); TRAUB, Christina, 93073 Neutraubling (DE)
(74) Vertreter: Grünecker Patent- und Rechtsanwälte PartG mbB
(86) Internationale Anmeldenummer: PCT/EP2013/068970
(87) Internationale Veröffentlichungsnummer: WO 2014/048765

(56) Entgegenhaltungen:
- EP-A2- 2 380 709
- WO-A1-2011/154072
- US-A1- 2012 212 499

## Beschreibung

Die Erfindung betrifft ein Bediensystem für eine Getränkeverarbeitungsmaschine, ein mobiles Bediengerät, einen Signalgeber und eine Sicherheitsbrille. Üblicherweise bedient ein Benutzer von Getränkeverarbeitungsanlagen die einzelnen Maschinen über ein Bediensystem. Dabei können durch das Bediensystem beispielsweise einzelne Abläufe in der Maschine ausgelöst, Parameter eingestellt und/oder Alarm- bzw. Warnsignale empfangen werden. Hierbei werden üblicherweise stationäre Bediengeräte und in zunehmenden Maße auch mobile Bediengeräte eingesetzt, wobei die mobilen Bediengeräte mit der gesamten Anlage kompatibel sind bzw. für unterschiedliche Maschinen eingesetzt werden können. Hierbei kann der Benutzer ein mobiles Bediengerät zur jeweiligen Maschine mitnehmen und gleichzeitig Funktionen anderer Maschinen ausführen oder überwachen.

Beispielsweise legt der Benutzer im Bereich einer bestimmten Maschine das mobile Bediengerät ab und kann bei Bedienvorgängen oder auch Reparaturvorgängen das Display des mobilen Bediengeräts im Auge behalten, um davon Informationen abzulesen. Ebenso kann er über das Bediengerät einzelne Komponenten der Maschine steuern, um die Bedienvorgänge oder auch eine Reparatur durchzuführen. Darüber hinaus werden dem Benutzer Alarm- und Warnsignale von dieser und/oder anderen Maschinen angezeigt und er kann sich somit entscheiden, ob gegebenenfalls ein dringender Bedienvorgang oder eine Reparatur einer anderen Maschine vorzuziehen ist.

Derartige Bediensysteme mit mobilen Bediengeräten erweisen sich in der Praxis oft als unergonomisch, da sie am Körper, in Taschen oder Halterungen befestigt sind bzw. aufbewahrt werden und somit nicht ständig einsehbar sind. Wenn der Benutzer das Bediengerät dann in eine Hand nimmt, hat er diese Hand dann nicht mehr frei, um Bedienvorgänge, Reparaturen, Wartungen und/oder Rüstvorgänge an der Maschine auszuführen. Gleichzeitig muss der Benutzer seinen Blick immer wieder von dem zu bedienenden/zu reparierenden Teil der Maschine abwenden, um das Display des Bediengeräts abzulesen.

Ebenfalls bekannt sind Zugangsberechtigungssysteme, bei denen der Benutzer einen sogenannten "Token" mitführt. Dies sind elektronische Schlüssel, die von der Maschine mit einem Lesegerät ausgelesen werden können und bei erfolgreicher Identifikation, erhält der Benutzer entsprechende Zugriffsrechte. Derartige Systeme haben zum Nachteil, dass einerseits der Benutzer den "Token" mitführen muss und dieser bei Verlust missbraucht werden könnte. Darüber hinaus ist an jeder Maschine ein kostenaufwändiges Lesegerät erforderlich, um den Token auszulesen.

Aus der DE 100 63 089 ist ein Augmented-Reality-System bekannt, bei dem der Benutzer über ein Head-Mounted-Display in einer Brille Informationen beim Service der Maschine eingeblendet bekommt. Dabei sieht der Benutzer einerseits den zu reparierenden Bereich der Maschine und andererseits dazu überlagerte, virtuell Informationen. Dementsprechend braucht er beim Arbeiten seinen Blick nicht zum Display hinwenden.

Aus der DE 10 2005 045 855 ist ebenfalls ein Augmented-Reality-System bekannt, bei dem die Kopfposition des Benutzers geortet wird und dieser dann in sein Head-Mounted-Display Informationen eingeblendet bekommt, um die Position eines Sensors in der Maschine genau auszurichten.

Derartige Augmented-Reality-Systeme haben zum Nachteil, dass eine Aktivierung des Nutzers lediglich über optische Signale erfolgt, die leicht übersehen werden können. Beispielsweise kann dies der Fall sein, wenn sich der Nutzer gerade auf eine bestimmte Handlung/Aufgabe konzentriert. Darüber hinaus bieten derartige Systeme keinen ausreichenden Arbeitsschutz.

Die EP 2 380 709 A2 offenbart eine 3D-Sicherheitsvorrichtung und Verfahren zu Absicherung und Bedienung einer Maschine, wobei dem Benutzer mit einer Anzeigeeinrichtung virtuelle Schalter eingeblendet und mit einer Auswerteeinheit Gesten oder Körperhaltungen den virtuellen Schaltern zugeordnet werden.

Die US 2012/0212499 A1 offenbart eine interaktive Datenbrille.

Die WO 2011/154072 A1 offenbart ein tragbares mobiles Bediengerät mit einer akustischen Einheit und einem Vibrationsmotor.

Der vorliegenden Erfindung liegt die Aufgabe zugrunde, ein Bediensystem für eine Maschine bereitzustellen, das in der Handhabung ergonomischer ist und einen ausreichenden Arbeitsschutz bietet.

Zur Lösung dieser Aufgabenstellung stellt die Erfindung ein Bediensystem mit den Merkmalen des Anspruchs 1 bereit. Vorteilhafte Ausführungsformen sind in den Unteransprüchen genannt.

Dadurch, dass die Sicherheitsbrille ein Anzeigesystem umfasst, werden einerseits die Augen des Benutzers vor gefährlichen Fremdkörpern geschützt und andererseits werden ihm direkt in die Sicherheitsbrille Informationen eingespielt, die ihn bei seiner Arbeit unterstützen. Beispielsweise kann ihm so das Anzugsdrehmoment für eine Schraube angezeigt werden, während er diese mit einem Drehmomentschlüssel festzieht. Ebenso können ihm Informationen über den Systemstatus, wie beispielsweise Temperaturen oder Durchflussmengen angezeigt werden.

Hierbei hat der Benutzer beide Hände frei, um die Reparaturvorgänge auszuführen. Darüber hinaus kann dem Benutzer sowohl im Anzeigesystem, als auch mithilfe des Signalsgebers angezeigt werden, ob Alarme oder Warnungen der Maschine oder von anderen Maschinen vorliegen. Durch den Signalgeber können die Alarm- und/oder Warnsignale unabhängig vom optischen Reiz durch das Anzeigesystem angezeigt werden, so dass diese vom Benutzer nicht übersehen werden können. Dadurch, dass das Bediengerät und/oder der Signalgeber und/oder die Sicherheitsbrille jeweils einen Datentransmitter umfassen, können sowohl Daten für die Anzeige von Informationen als auch Alarm- und/oder Warnsignale zwischen diesen Einheiten in einfacher Weise ausgetauscht werden.

Das Bediensystem kann zur Bedienung und/oder Wartung der Maschine, mehrerer Maschinen, einer gesamten Anlage und/oder auch mehrerer Anlagen ausgebildet sein. Somit unterstützt das erfindungsgemäße Bediensystem in ergonomischer Weise den Benutzer bei der Bedienung und/oder Wartung und schützt dabei gleichzeitig die Augen des Benutzers vor gefährlichen Fremdkörpern.

Die Maschine kann in einer Getränkeverarbeitungsanlage angeordnet sein. Die Maschine kann eine computerbasierte Maschinensteuerung umfassen. Die Maschine kann eine Getränkeverarbeitungsmaschine und/oder eine Behälterbehandlungsmaschine sein, die insbesondere eine Streck-Blas-Maschine, ein Rinser, ein Füller, ein Verschließer, ein Etikettierer und/oder eine Verpackungsmaschine oder eine andere Getränkeverarbeitungsmaschine und/oder eine andere Behälterbehandlungsmaschine ist.

Das mobile Bediengerät kann einen Mikroprozessor, eine Tastatur und/oder ein Display umfassen, das insbesondere berührungsempfindlich ist. Ebenso kann das mobile Bediengerät einzelne Bedienknöpfe umfassen. Das mobile Bediengerät kann ein Tablet-Computer oder ein Smart-Phone sein.

Der Signalgeber kann ein Armband, eine Kette zum Umhängen, eine Klammer und/oder ein Verschluss zur Befestigung an einem Bekleidungsstück und/oder an einem Körperteil des Benutzers umfassen. Ebenso kann der Signalgeber in die Sicherheitsbrille integriert sein oder an einer Kopfbedeckung befestigt sein. Dadurch kann der Benutzer mit einem Vibrationssignal am Kopf oder mit einem optischen Signal an/vor den Augen aktiviert werden. Der Signalgeber kann einen Mikroprozessor und/oder eine Batterie zur Energieversorgung umfassen.

Die Sicherheitsbrille kann zum Schutz gegen mechanische, thermische, chemische, biologische, elektrische und/oder optische Gefährdung ausgeführt sein. Die Sicherheitsbrille kann entsprechend gesetzlicher Normen zum Arbeitsschutz ausgeführt sein.

Das Anzeigesystem kann als Head-Mounted-Display (HMD) ausgeführt sein. Bei einem Head-Mounted-Display kann eine abbildende Optik vor dem Auge so angeordnet sein, dass diese vor dem Auge des Benutzers eine virtuelle Abbildung eines Displays erzeugt. Die abbildende Optik des Head-Mounted-Displays kann halbdurchlässig ausgeführt sein, insbesondere, wobei der Benutzer eine Überlagerung der Umgebung mit den Informationen des Displays sehen kann. Alternativ kann das Anzeigesystem als virtuelle Netzhautanzeige ausgebildet sein, bei der ein Bild direkt auf die Netzhaut des Auges projiziert wird. Die virtuelle Netzhautanzeige kann einen Laser umfassen. Ebenso kann das Anzeigesystem als Projektor ausgebildet sein, mit dem die Information außerhalb der Sicherheitsbrille auf eine Fläche projiziert wird. Der Projektor kann einen Laser und eine Scaneinheit umfassen. Hierdurch kann durch die Ablenkung des Lasers ein Bild direkt auf die Umgebung projiziert werden. Ebenso kann der Projektor als Miniaturprojektor ausgebildet sein, wobei insbesondere ein Display von einer LED beleuchtet wird und mit einer Optik abgebildet wird. Das Display des Head-Mounted-Displays bzw. des Projektors kann ein LCD, DLP oder LCoS sein.

Der Datentransmitter kann dazu ausgebildet sein, Daten zwischen den jeweiligen Einheiten per Kabel, Glasfaser oder drahtlos per Funk zu übertragen. Insbesondere kann der Datentransmitter eine WLAN- oder Bluetooth-Schnittstelle umfassen. Der Datentransmitter kann eine Empfängereinheit und/oder eine Sendeeinheit umfassen.

Bei dem Bediensystem kann die Sicherheitsbrille eine Hörsprecheinheit umfassen, die insbesondere mit dem Datentransmitter der Sicherheitsbrille zur Übermittlung von Sprachinformation verbunden ist. Dadurch kann der Benutzer während er arbeitet mit Kollegen sprechen, um beispielsweise Ratschläge einzuholen oder Informationen über den Fortgang der Arbeit weiterzuleiten. Dadurch, dass die Hörsprecheinheit mit dem Datentransmitter der Sicherheitsbrille zur Übermittlung von Sprachinformation verbunden ist, braucht dieser keine eigene Übertragungsschnittstelle. Darüber hinaus ist es mit diesem System möglich, dass der Benutzer von Kollegen vorgelegte Dokumente über das Anzeigesystem einsehen kann und gleichzeitig diese mit den Kollegen bespricht. Die Hörsprecheinheit kann einen Lautsprecher oder Kopfhörer und ein Mikrofon umfassen. Der Kopfhörer kann als In-ear-Kopfhörer ausgebildet sein.

Das Bediensystem kann eine Sicherheitsbrille mit einem Gehörschutz zur Unterdrückung von störenden Umgebungsgeräuschen umfassen, der insbesondere mit aktiver Schallunterdrückung arbeitet. Dadurch benötigt der Benutzer keinen separaten Gehörschutz, der dann am Kopf bei gleichzeitigem Tragen der Sicherheitsbrille drückt. Durch den Gehörschutz können zu laute Umgebungsgeräusche unterdrückt werden. Mit der aktiven Schallunterdrückung kann ein akustisches Gegensignal erzeugt werden, so dass störende Umgebungsgeräusche per Interferenz im Ohr ausgelöscht werden. Dadurch werden die störenden Umgebungsgeräusche besonders gut unterdrückt.

Bei dem Bediensystem kann die Hörsprecheinheit in den Gehörschutz integriert sein. Dadurch können vorhandene Systeme der Sprecheinheit für den Gehörschutz verwendet werden. Der Kopfhörer der Hörsprecheinheit kann so abgedichtet sein, dass er störende Umgebungsgeräusche unterdrückt. Ebenso kann das Mikrofon und der Kopfhörer aus der Hörsprecheinheit zur aktiven Schallunterdrückung eingesetzt werden. Dadurch kann der Benutzer einerseits die Sprecheinheit zur Kommunikation mit anderen Kollegen benutzen und ist gleichzeitig gegen störende Umgebungsgeräusche geschützt.

Bei dem Bediensystem kann die Sicherheitsbrille eine erste Kamera zur Erfassung von Objekten im Sichtbereich des Benutzers umfassen. Die von der ersten Kamera erfassten Bilder können über den Datentransmitter zur Speicherung und/oder zur Kommunikation mit Kollegen übertragen werden. Dadurch können Kollegen des Benutzers direkt sehen, was der Benutzer im Blickfeld hat und diesen so beim Service der Anlage unterstützen. Darüber hinaus kann das Umgebungsbild der ersten Kamera über das Anzeigesystem dem Benutzer angezeigt werden, insbesondere wenn die Sicherheitsbrille nicht transparent ausgeführt ist. Die erste Kamera kann als CCD- oder CMOS-Kamera mit einem Objektiv ausgeführt sein. Das Bediensystem kann eine Bildauswerteeinheit umfassen, die insbesondere dazu ausgebildet ist, Objekte in den Bilddaten automatisch zu erkennen. Dadurch können dem Benutzer automatisch Informationen zu den im Sichtbereich vorhandenen Objekten im Anzeigesystem der Sicherheitsbrille angezeigt werden.

Das Bediensystem kann eine Gestenerkennungseinheit umfassen, um Gesten des Benutzers in Maschinenkommandos zu verarbeiten. Hierdurch kann der Benutzer mit den Händen Kommandos an das Bediensystem über Gesten berührungsfrei abgeben. Dadurch wird die Bedienung weiter vereinfacht. Die Gestenerkennungseinheit kann dazu ausgebildet sein, die Bilddaten der ersten Kamera auszuwerten. Dabei kann die erste Kamera einen Bilderfassungsbereich aufweisen, der auch die Hände des Benutzers erfasst. Dadurch können mit den Händen abgegebene Gesten des Benutzers durch die erste Kamera gefilmt werden und mit der Gestenerkennungseinheit in Maschinenkommandos verarbeitet werden. Hierdurch ist eine besonders einfache Bedienung des Bediensystems möglich.

Das Bediensystem kann ein Ortungssystem zur Erfassung der Position und/oder Orientierung der Sicherheitsbrille umfassen, das insbesondere mindestens teilweise an der Sicherheitsbrille angeordnet ist. Das Ortungssystem kann Beschleunigungssensoren und/oder Lagesensoren umfassen. Ebenso kann das Ortungssystem ein Trackingsystem und Marker umfassen, die insbesondere für das Trackingsystem erkennbar sind. Das Trackingsystem kann mit der Maschine in einem festen Bezug stehen und die Marker an der Sicherheitsbrille angebracht sein. Ebenso können das Trackingsystem an der Sicherheitsbrille und die Marker an der Maschine angebracht sein, wobei insbesondere die erste Kamera die Marker als Bilddaten aufnimmt. Dadurch kann die Lage der Sicherheitsbrille und damit der Sichtbereich des Benutzers relativ zur Maschine erfasst werden und dem Benutzer können so entsprechend nur Informationen eingeblendet werden, die für Objekte im Sichtbereich gedacht sind. Darüber hinaus kann über das Ortungssystem der Ort des Benutzers in der gesamten Anlage bestimmt werden. Dadurch kann der Benutzer besonders einfach durch Kollegen aufgefunden werden. Die Erfassung der Position und/oder der Orientierung der Sicherheitsbrille kann relativ zu der Maschine erfolgen.

Bei dem Bediensystem kann die Sicherheitsbrille eine zweite Kamera umfassen, die zur Erfassung mindestens eines Auges des Benutzers ausgebildet ist. Dadurch kann die Blickrichtung des Benutzers besonders einfach erfasst werden. Entsprechend kann die Darstellung der Information in dem Anzeigesystem an die Blickrichtung des Benutzers noch feiner angepasst werden.

Das Bediensystem kann eine biometrische Erkennungseinheit umfassen, um den Benutzer zur Erstellung einer Zugangsberechtigung zu identifizieren, insbesondere wobei die biometrische Erkennungseinheit dazu ausgebildet ist, Bilddaten von einem Auge des Benutzers auszuwerten. Dadurch kann der Benutzer eindeutig identifiziert und so der Zugang zur Maschine besonders sicher geregelt werden. Darüber hinaus braucht die Maschine keinen eigenen Empfänger für einen elektronischen Schlüssel (Token) haben, um die Zugangsberechtigung zu gewähren. Die zweite Kamera kann Bilddaten vom Auge des Benutzers erzeugen und an die biometrischen Erkennungseinheit übermitteln. Die zweite Kamera kann mit der biometrischen Erkennungseinheit über den Datentransmitter verbunden sein.

Der Signalgeber kann am Körper des Benutzers oder an der Sicherheitsbrille angebracht sein. Dadurch stört der Signalgeber den Benutzer nicht bei der Arbeit. Durch die Integration in die Sicherheitsbrille ist der Signalgeber vom Benutzer besonders gut wahrzunehmen.

Der Signalgeber kann einen Vibrator, einen akustischen und/oder einen optischen Signalgeber umfassen. Durch den Vibrator erhält der Benutzer einen Aktivierungsreiz, den er unabhängig von der Lautstärke der Umgebung wahrnehmen kann. Gleiches kann auch durch den optischen Signalgeber erzielt werden. Darüber hinaus kann der Benutzer durch den akustischen Signalgeber auf die Alarm- und/oder die Warnsignale hingewiesen werden, falls er keinen direkten Sichtkontakt mit dem Signalgeber hat. Der Signalgeber kann unterschiedliche Alarm- und/oder Warnsignaltypen als unterschiedlich codierte Vibrations-, Ton- und/oder Lichtsignale wiedergeben. Die unterschiedlichen Codierungen können dabei verschiedene Intensitäten oder Rhythmen aufweisen. Der optische Signalgeber kann unterschiedliche Alarm- und/oder Warnsignaltypen mit unterschiedlichen Farben anzeigen. Der optische Signalgeber kann ein Display umfassen.

Bei dem Bediensystem kann das Anzeigesystem dazu ausgebildet sein, dem Benutzer auf jedem Auge ein unterschiedliches Bild darzustellen, insbesondere, um 3D-Informationen anzuzeigen. 3D-Informationen können dreidimensionale Informationen sein. Hierdurch können die Informationen virtuell für den Benutzer im Raum erscheinen. Dadurch kann der Benutzer die Informationen besonders einfach auseinanderhalten.

Bei dem Bediensystem kann das Anzeigesystem dazu ausgebildet sein, dem Benutzer virtuelle Bediengeräte anzuzeigen. Dadurch kann der Benutzer über die Gesten die virtuellen Bediengeräte bedienen und so Parameter der Maschine besonders einfach verändern. Darüber hinaus wird dem Benutzer die Information so besonders ergonomisch angezeigt.

Das Bediensystem kann zu einem Datentransfer mit einer externen Servicestation ausgebildet sein, insbesondere zur Ferndiagnose und/oder -wartung. Die externe Servicestation kann in einer Servicezentrale auf dem Anlagengelände oder bei einem Hersteller der Maschine angeordnet sein. Die externe Servicestation kann ein Computer mit einer Servicesoftware sein. Der Datentransmitter kann für den Datentransfer ausgebildet sein. Bei dem Datentransfer können Bild- und Tondaten übertragen werden, insbesondere Daten für das Anzeigesystem, für die Hörsprecheinheit, von der ersten Kamera, von der zweiten Kamera und/oder von dem Ortungssystem. Durch die Ferndiagnose und/oder -wartung ist die direkte Kommunikation zwischen dem Benutzer und einem Experten in einer Servicestation - z.B. beim Hersteller - möglich.

Bediensystem kann eine separate Kamera umfassen und das Anzeigesystem kann dazu ausgebildet sein, das Bild der separaten Kamera auf Abruf oder Anforderung durch den Benutzer darzustellen. Die separate Kamera kann dazu ausgebildet sein, Zustände an einzelnen Punkten der Maschine aufzunehmen. So wäre es denkbar, dass der Befüllungszustand von Preform-, Verschluss-, Etikettenbehältern oder weiteren Behältern angezeigt wird oder auch kritische Anlagenpunkte angezeigt werden, bei denen es häufiger zu Störungen oder anderen Problemen kommt. Die separate Kamera kann mobil ausgeführt sein. Dadurch kann deren Position jederzeit verändert werden.

Weitere Merkmale und Vorteile der Erfindung werden nachfolgend anhand der beispielhaften Figuren erläutert. Dabei zeigen:
- Fig. 1: eine perspektivische Darstellung eines erfindungsgemäßen Bediensystems;
- Fig. 2: eine perspektivische Darstellung der Sicherheitsbrille des erfindungsgemäßen Bediensystems aus der Fig. 1;
- Fig. 3: eine Frontalansicht des mobilen Bediengeräts für die Maschine des erfindungsgemäßen Bediensystems aus der Fig. 1; und
- Fig. 4: eine Seitenansicht eines Signalgebers des erfindungsgemäßen Bediensystems aus der Fig. 1.

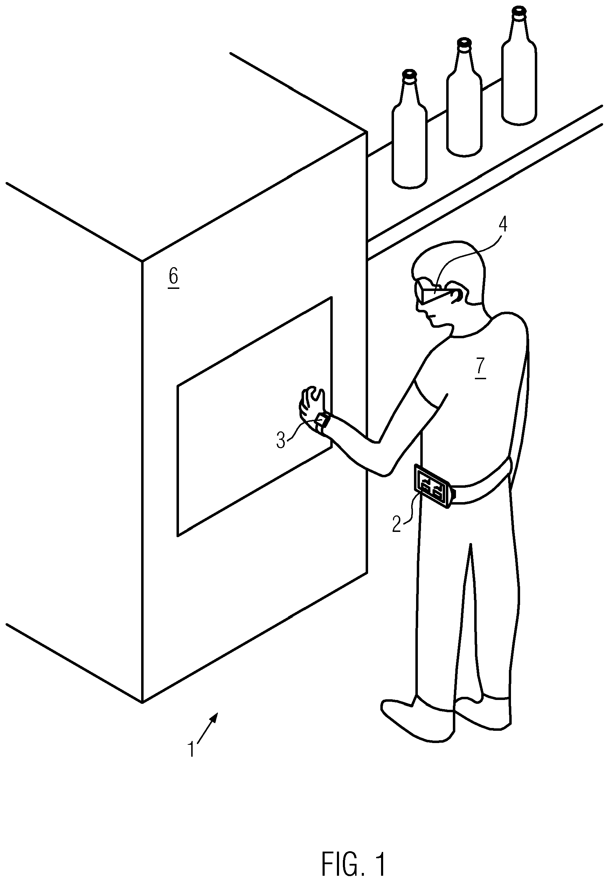

Fig. 1 zeigt eine perspektivische Darstellung eines erfindungsgemäßen Bediensystems 1. Zu sehen ist dabei, dass ein Benutzer 7 vor einer Maschine 6 zur Bedienung oder zur Wartung steht. Die dargestellte Maschine 6 ist hierbei eine Getränkeverarbeitungsmaschine.

Der Benutzer 7 trägt einen Gürtel, an dem ein mobiles Bediengerät 2 befestigt ist. Gleichzeitig trägt der Benutzer 7 eine Sicherheitsbrille 4, die ein Anzeigesystem umfasst, das als Head-Mounted-Display ausgeführt ist. Hierüber werden dem Benutzer 7 Informationen ins Sichtfeld eingeblendet. An seinem linken Arm trägt der Benutzer 7 einen Signalgeber 3. Der Signalgeber 3 weist dabei sowohl einen Vibrator, als auch einen akustischen und einen optischen Signalgeber auf. Hierüber können dem Benutzer 7 verschiedene Alarm- und/oder Warnsignale unabhängig von dem Anzeigesystem in der Sicherheitsbrille 4 übermittelt werden. Dadurch ist die Wahrscheinlichkeit vermindert, dass der Benutzer 7 diese Signale nicht bemerkt.

Beim Service bzw. der Bedienung der Maschine 6 hat der Benutzer 7 beide Hände frei, um manuelle Tätigkeiten auszuführen. Gleichzeitig werden dem Benutzer 7 über das Anzeigesystem in der Sicherheitsbrille 4 entsprechende Informationen über den Status der Maschine 6 angezeigt. Ebenfalls ist es möglich, dass dem Benutzer 7 Dokumentationen der Maschine 6 mittels des Anzeigesystems eingeblendet werden, mit denen er den Service durchführen kann. Ebenso werden dem Benutzer 7 mit dem Anzeigesystem virtuelle Bediengeräte angezeigt, an denen er Parameter der Maschine 6 verstellen kann.

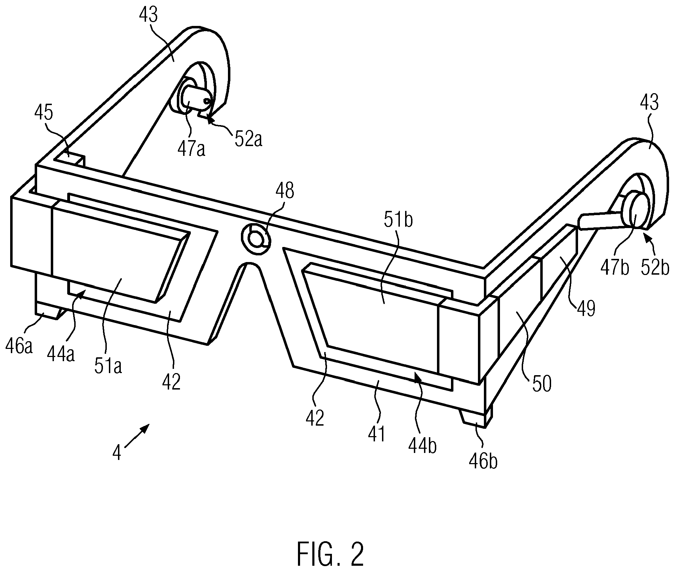

In Fig. 2 ist eine perspektivische Darstellung der Sicherheitsbrille 4 des erfindungsgemäßen Bediensystems 1 aus der Fig. 1 dargestellt. Zu sehen ist dabei ein Brillenrahmen 41, in den die Sicherheitsgläser 42 eingelassen sind. Des Weiteren weist die Sicherheitsbrille 4 zwei Bügel 43 auf, die über die Ohren des Benutzers 7 getragen werden.

Vor jedem Brillenglas 42 der Sicherheitsbrille 4 ist ein Anzeigesystem 44a, 44b angeordnet. Diese sind jeweils als Head-Mounted-Display 51a, 51b ausgeführt. Dabei weisen die Head-Mounted-Displays 51a, 51b Optiken auf, mit denen dem Benutzer 7 für jedes Auge jeweils unterschiedliche Bilder von LCD-Displays eingeblendet werden. Dabei sind die Head-Mounted-Displays 51a, 51b halbdurchlässig (semi-transparent) ausgeführt, so dass der Benutzer 7 gleichzeitig die Umgebung vor der Sicherheitsbrille 4 sehen kann. Mit dem Anzeigesystem 44a, 44b können dem Benutzer 7 für jedes Auge jeweils unterschiedliche Bilder angezeigt werden, so dass er auch dreidimensionale Informationen betrachten kann. Folglich sieht der Benutzer 7 durch die Sicherheitsbrille 4 einerseits die Umgebung und andererseits damit überlagerte, virtuelle Informationen. Beispielsweise wird dem Benutzer 7, ähnlich einer Legende in einer Zeichnung, zu einer im Blickfeld befindlichen Schraube das Anzugsdrehmoment und/oder der dafür geeignete Werkzeugtyp angezeigt.

Darüber hinaus weist die Sicherheitsbrille 4 eine Hörsprecheinheit 46a, 46b, 47a, 47b auf. Diese ist als Gehörschutz 52a, 52b ausgeführt. Hierbei sind die Kopfhörer 47a, 47b für jedes Ohr als Stöpsel (In-Ear-Kopfhörer) ausgebildet, so dass diese gegen den Hörkanal abdichten. Dadurch werden störende Umgebungsgeräusche unterdrückt und können nicht in den Hörkanal eindringen. Gleichzeitig erfassen die Mikrophone 46a und 46b von außen die störenden Umgebungsgeräusche und geben zusätzlich ein Kompensationssignal durch die Kopfhörer 47a, 47b ab, so dass die verbleibenden Umgebungsgeräusche weiter vermindert werden. Darüber hinaus werden Nutzsignale, wie beispielsweise menschliche Stimmen durch die Mikrophone 46a, 46b erfasst und durch eine Filtereinheit (hier nicht dargestellt) herausgefiltert und dem Benutzer 7 von den Umgebungsgeräuschen isoliert über die Kopfhörer 47a, 47b, eingespielt. Dadurch ist es dem Benutzer 7 möglich, mit den Kollegen vor Ort zu kommunizieren. Des Weiteren kann die dargestellte Hörsprecheinheit 46a, 46b, 47a, 47b als Fernsprecheinrichtung in Verbindung mit einem Handy oder weiteren Einheiten des Bediensystems 1 verwendet werden. Beispielsweise um mit Kollegen zu sprechen, die nicht vor Ort sind. Die Hörsprecheinheit 46a, 46b, 47a, 47b kann über den Datentransmitter 50 mit externen Einheiten verbunden sein, insbesondere um Sprachdaten zu übermitteln.

Ebenfalls zu sehen ist ein Datentransmitter 50, der als drahtlose Funkschnittstelle ausgeführt ist. Die Funkschnittstelle kann eine WLAN- oder Bluetooth-Schnittstelle sein. Mit dem Datentransmitter 50 steht die Sicherheitsbrille 4 mit dem mobilen Bediengerät 2 der Fig. 1 in Verbindung. Ebenfalls kann die Sicherheitsbrille 4 mit dem Signalgeber 3 aus der Fig. 1 in Verbindung stehen. Durch diese Verbindung können Daten zwischen den Einheiten ausgetauscht werden.

Die Sicherheitsbrille 4 weist zudem eine erste Kamera 48 auf, die nach vorne gerichtet ist und das Sichtfeld des Benutzers 7 erfasst. Dabei erzeugt die erste Kamera 48 Bilddaten von der Umgebung unmittelbar vor dem Benutzer 7, wobei diese über den Datentransmitter 50 an Kollegen weitergeben werden können, so dass diese den Benutzer 7 beim Service unterstützen können. Des Weiteren erfasst die erste Kamera 48 die Hände des Benutzers 7, um dessen Gesten als Bildsequenzen aufzunehmen. Die so gewonnenen Bilder können über den Datentransmitter 50 an das mobile Bediengerät 2 übermittelt werden, um die Gesten zu analysieren. Ebenso können aus den Bilddaten automatisch Objekte im Sichtbereich des Benutzers 7 erkannt werden.

Darüber hinaus verfügt die Sicherheitsbrille 4 über eine zweite Kamera 45, die auf ein Auge des Benutzers 7 gerichtet ist. Bilddaten der zweiten Kamera 45 werden mit dem Datentransmitter 50 an das mobile Bediengerät 2 weitergeleitet. Dort dienen sie zur Analyse der Blickrichtung und zur Identifikation des Benutzers 7 über biometrische Erkennungsmerkmale.

Zusätzlich weist die Sicherheitsbrille 4 einen Ortungssensor 49 auf, mit dem die Lage und Position der Sicherheitsbrille 4 bestimmt werden kann. Das Ortungssystem 49 weist dabei mehrere Beschleunigungssensoren und Lagesensoren auf. Dadurch kann die Orientierung und Lage des Kopfs des Benutzers 7 zur Maschine 1 bestimmt werden, um beispielsweise über das Anzeigesystem 44a, 44b entsprechende Ausrichtungsinformationen anzuzeigen, zu der hin bestimmte Maschinenelemente positioniert werden müssen.

Die Sicherheitsbrille 4 weist darüber hinaus einen Mikroprozessor als Steuereinheit und eine Batterie zur Energieversorgung auf (hier nicht dargestellt).

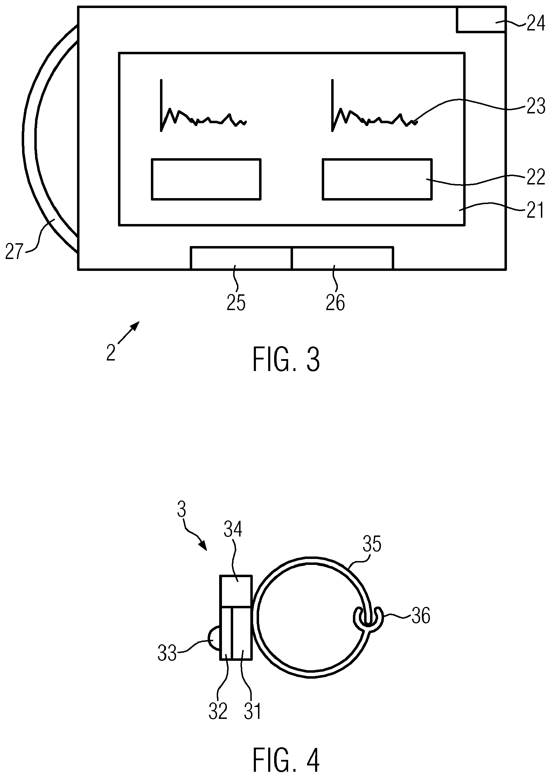

In Fig. 3 ist eine Frontalansicht des mobilen Bediengeräts des erfindungsgemäßen Bediensystems 1 aus der Fig. 1 gezeigt. Zu sehen ist ein berührungsempfindliches Display 21 mit einem Griff 27, auf dem Menüelemente 22 und Informationen 23 angezeigt werden. Darüber kann der Benutzer 7 in üblicher Weise die Maschine 6 bedienen. Darüber hinaus verfügt das mobile Bediengerät 2 auf der Rückseite eine Klammer (hier nicht dargestellt), mit der es am Gürtel des Benutzers 7 befestigt werden kann.

Zu sehen ist ebenfalls der Datentransmitter 24, der einen Datenübertragungsstandard (beispielsweise Bluetooth) aufweist, der zu den Datentransmittern 50, 34 in der Schutzbrille 4 bzw. im Signalgeber 3 kompatibel ist. Hierbei werden Daten drahtlos übertragen und zwischen dem Bediengerät 2, dem Signalgeber 3 bzw. der Sicherheitsbrille 4 ausgetauscht. Darüber hinaus ist eine Gestenerkennungseinheit 25 zu sehen. Diese steht über die Datentransmitter 24, 50 mit der ersten Kamera 48 in Verbindung. Da diese die Hände des Benutzers 7 aufnimmt und die Bilder an die Gestenerkennungseinheit 25 weitergibt, können diese nun mit Bildverarbeitungsalgorithmen analysiert werden. Werden entsprechende Gesten des Benutzers 7 erkannt, so werden diese als Maschinenkommandos übersetzt und ausgegeben. Diese Maschinenkommandos sind Codes, die den verschiedenen Gesten zugeordnet sind. Beispielsweise kann ein solches Maschinenkommando bedeuten, dass die Maschine 6 die Getränke ein Stück vorschiebt.

Darüber hinaus ist die biometrische Erkennungseinheit 26 zu sehen, welche ebenfalls in dem mobilen Bediengerät 2 integriert ist. Hierbei werden die Bilddaten der zweiten Kamera 45 von der Sicherheitsbrille 4 über die Datentransmitter 50, 24 an die biometrische Erkennungseinheit 26 weitergeleitet und dort analysiert. Mit entsprechenden biometrischen Erkennungsalgorithmen werden dann aus den Bilddaten entsprechend individuelle Erkennungsmerkmale des Benutzers 7 herausgefiltert und dieser darüber eindeutig identifiziert. Beispielsweise wird die Iris des Benutzerauges analysiert und identifiziert. Handelt es sich um einen berechtigten Benutzer 7, so erhält dieser entsprechende Zugriffsrechte auf das mobile Bediengerät 2 bzw. die Maschine 6. Trägt ein nicht berechtigter Benutzer 7 die Sicherheitsbrille 4, so werden diesem die Zugriffsrechte verweigert und ein Alarm ausgelöst.

In Fig. 4 ist eine Seitenansicht des Signalgebers 3 des erfindungsgemäßen Bediensystems 1 aus Fig. 1 dargestellt. Zu sehen ist der Signalgeber 5 mit einer daran angebrachten Verbindungsschlaufe 35 zur Befestigung am Handgelenk des Benutzers 7. Die Verbindungsschlaufe 35 umfasst hierbei einen Schließmechanismus 36. Darüber hinaus umfasst der Signalgeber 3 einen Datentransmitter 34 zum Empfang von Daten des Datentransmitters 24 des mobilen Bediengeräts 2. Hierbei können Alarm- und Warnsignale vom Bediengerät 2 an den Signalgeber 3 per Funk übermittelt werden. Des Weiteren umfasst der Signalgeber 3 einen Vibrator 31, einen akustischen Signalgeber 32 und einen optischen Signalgeber 33. Hierdurch können die Alarm- und Warnsignale als besonders breites Spektrum von Aktivierungsreizen an den Benutzer 7 weitergegeben werden. Es ist jedoch auch möglich, dass der Signalgeber 3 nur eine der drei vorgenannten Möglichkeiten aufweist. Der Signalgeber 3 ist dabei besonders leicht und ergonomisch gebaut. Darüber hinaus enthält der Signalgeber 3 eine Batterie und einen Mikroprozessor zur Verarbeitung der Alarm- und Warnsignale.

Bei dem in den Fig. 1 - 4 dargestellten, erfindungsgemäßen Bediensystem 1 wird der Benutzer 7 somit besonders ergonomisch beim Service der Maschine 6 unterstützt. Er muss dabei seinen Blick nicht von der gerade durchgeführten Tätigkeit abwenden, um Informationen über den Maschinenstatus zu erhalten. Gleichzeitig kann er mit Kollegen über die Hörsprecheinheit kommunizieren und über das Anzeigesystem entsprechende Dokumente einsehen. Gleichzeitig ist die eindeutige Identifikation des Benutzers 7 über die zweite Kamera 45 an der Sicherheitsbrille 4 und die biometrische Erkennungseinheit 26 möglich, um dem Benutzer 7 eine entsprechende Zugangsberechtigung zur Maschine 6 zu gewähren. Darüber hinaus wird der Benutzer 7 beim Auftreten von Alarm oder Warnzuständen mit dem Signalgeber 3 zuverlässig informiert.

## Patentansprüche

1. Bediensystem (1) für eine Getränkeverarbeitungsmaschine (6), umfassend
ein mobiles Bediengerät (2) für die Getränkeverarbeitungsmaschine (6) mit einem Display,
**gekennzeichnet durch**
einen Signalgeber (3) zur Meldung von Alarm- und/oder Warnsignalen, und
einer Sicherheitsbrille (4) zum Schutz der Augen eines Benutzers (7),
wobei die Sicherheitsbrille (4) ein Anzeigesystem (44a, 44b) umfasst, das insbesondere als Head-Mounted-Display oder virtuelle Netzhautanzeige oder Projektor ausgebildet ist, und
wobei das Bediengerät (2) und die Sicherheitsbrille (4) und optional der Signalgeber (3) jeweils einen Datentransmitter (24, 34, 50) zum Austausch von Maschineninformationen und/oder Alarm- und/oder Warnsignalen umfassen.

2. Bediensystem (1) für eine Getränkeverarbeitungsmaschine (6) nach Anspruch 1, wobei die Sicherheitsbrille (4) eine Hörsprecheinheit (46a, 46b, 47a, 47b) umfasst, die insbesondere mit dem Datentransmitter der Sicherheitsbrille (4) zur Übermittlung von Sprachinformation verbunden ist.

3. Bediensystem (1) für eine Getränkeverarbeitungsmaschine (6) nach Anspruch 1 oder 2, wobei die Sicherheitsbrille (4) einen Gehörschutz (52a, 52b) zur Unterdrückung von störenden Umgebungsgeräuschen umfasst, der insbesondere mit aktiver Schallunterdrückung arbeitet.

4. Bediensystem (1) für eine Getränkeverarbeitungsmaschine (6) nach Anspruch 2 und 3, wobei die Hörsprecheinheit (46a, 46b, 47a, 47b) in den Gehörschutz (52a, 52b) integriert ist.

5. Bediensystem (1) für eine Getränkeverarbeitungsmaschine (6) nach wenigstens einem der vorangegangenen Ansprüche, wobei die Sicherheitsbrille (4) eine erste Kamera (48) zur Erfassung von Objekten im Sichtbereich des Benutzers (7) umfasst.

6. Bediensystem (1) für eine Getränkeverarbeitungsmaschine (6) nach wenigstens einem der vorangegangenen Ansprüche, wobei das Bediensystem (1) eine Gestenerkennungseinheit (25) umfasst, um Gesten des Benutzers (7) in Maschinenkommandos zu verarbeiten.

7. Bediensystem (1) für eine Getränkeverarbeitungsmaschine (6) nach wenigstens einem der vorangegangenen Ansprüche, wobei das Bediensystem (1) ein Ortungssystem (49) zur Erfassung der Position und/oder Orientierung der Sicherheitsbrille (4) umfasst, das insbesondere mindestens teilweise an der Sicherheitsbrille (4) angeordnet ist.

8. Bediensystem (1) für eine Getränkeverarbeitungsmaschine (6) nach wenigstens einem der vorangegangenen Ansprüche, wobei die Sicherheitsbrille (4) eine zweite Kamera (45) umfasst, die zur Erfassung mindestens eines Auges des Benutzers ausgebildet ist.

9. Bediensystem (1) für eine Getränkeverarbeitungsmaschine (6) nach wenigstens einem der vorangegangenen Ansprüche, wobei das Bediensystem (1) eine biometrische Erkennungseinheit (26) umfasst, um den Benutzer (7) zur Erstellung einer Zugangsberechtigung zu identifizieren, insbesondere wobei die biometrische Erkennungseinheit (7) dazu ausgebildet ist, Bilddaten von einem Auge des Benutzers auszuwerten.

10. Bediensystem (1) für eine Getränkeverarbeitungsmaschine (6) nach wenigstens einem der vorangegangenen Ansprüche, wobei der Signalgeber (3) am Körper des Benutzers (7) angebracht ist und/oder an der Sicherheitsbrille (4).

11. Bediensystem (1) für eine Getränkeverarbeitungsmaschine (6) nach wenigstens einem der vorangegangenen Ansprüche, wobei das Anzeigesystem (44a, 44b) dazu ausgebildet ist, dem Benutzer (7) auf jedem Auge ein unterschiedliches Bild darzustellen, insbesondere um 3D-Informationen anzuzeigen.

12. Bediensystem (1) für eine Getränkeverarbeitungsmaschine (6) nach wenigstens einem der vorangegangenen Ansprüche, wobei das Anzeigesystem (44a, 44b) dazu ausgebildet ist, dem Benutzer (7) virtuelle Bediengeräte anzuzeigen.

13. Bediensystem (1) für eine Getränkeverarbeitungsmaschine (6) nach wenigstens einem der vorangegangenen Ansprüche, wobei das Bediensystem (1) eine separate Kamera umfasst und das Anzeigesystem (44a, 44b) dazu ausgebildet ist, das Bild der separaten Kamera auf Abruf oder Anforderung durch den Benutzer (7) darzustellen.

## Claims

1. Operator system (1) for a beverage processing machine (6), comprising:
a mobile operator device (2) for the beverage processing machine (1) with a Display,
**characterized by**
a signal generator (3) for reporting alarm and/or warning signals, and
safety glasses (4) for protecting the eyes of a user (7),
wherein the safety glasses (4) comprise a display system (44a, 44b) that is configured, in particular, as a head-mounted display, or a virtual retina display, or a projector, and
wherein the operator device (2) and the safety glasses (4) and optionally the signal generator (3) each comprise a data transmitter (24, 34, 50) for exchanging machine information and/or alarm and/or warning signals.

2. Operator system (1) for a beverage processing machine (6) according to claim 1, wherein the safety glasses (4) comprise a talk-listen unit (46a, 46b, 47a, 47b) which, in particular, is connected to the data transmitter of the safety glasses (4) for transmitting speech information.

3. Operator system (1) for a beverage processing machine (6) according to claim 1 or 2, wherein the safety glasses (4) comprise a hearing protector (52a, 52b) for suppressing disturbing ambient noise which, in particular, works with an active sound suppression.

4. Operator system (1) for a beverage processing machine (6) according to claim 2 and 3, wherein the talk-listen unit (46a, 46b, 47a, 47b) is integrated in the hearing protector (52a, 52b).

5. Operator system (1) for a beverage processing machine (6) according to at least one of the preceding claims, wherein the safety glasses (4) comprise a first camera (48) for detecting objects in the field of vision of the user (7).

6. Operator system (1) for a beverage processing machine (6) according to at least one of the preceding claims, wherein the operator system (1) comprises a gesture identification unit (25) for processing gestures of the user (7) to machine commands.

7. Operator system (1) for a beverage processing machine (6) according to at least one of the preceding claims, wherein the operator system (1) comprises a locating system (49) for detecting the position and/or orientation of the safety glasses (4) which, in particular, is at least partially arranged on the safety glasses (4).

8. Operator system (1) for a beverage processing machine (6) according to at least one of the preceding claims, wherein the safety glasses (4) comprise a second camera (45), which is configured to detect at least one eye of the user.

9. Operator system (1) for a beverage processing machine (6) according to at least one of the preceding claims, wherein the operator system (1) comprises a biometric identification unit (26) for identifying the user (7) in order to issue an access authorization, in particular, wherein the biometric identification unit (26) is configured to evaluate image data of an eye of the user (7).

10. Operator system (1) for a beverage processing machine (6) according to at least one of the preceding claims, wherein the signal generator (3) is attached to the body of the user (7) and/or to the safety glasses (4).

11. Operator system (1) for a beverage processing machine (6) according to at least one of the preceding claims, wherein the display system (44a, 44b) is configured to present a different image to each eye of the user (7), in particular, to display 3D information.

12. Operator system (1) for a beverage processing machine (6) according to at least one of the preceding claims, wherein the display system (44a, 44b) is configured to display virtual operator devices to the user (7).

13. Operator system (1) for a beverage processing machine (6) according to at least one of the preceding claims, wherein the operator system (1) comprises a separate camera, and the display system (44a, 44b) is configured to represent the image of the separate camera on call or request from the user (7).

## Revendications

1. Système de commande de service (1) pour une machine de traitement de boissons (6), comprenant un appareil de commande de service mobile (2) pour la machine de traitement de boissons (6) avec un écran de visualisation,
**caractérisé par**
un indicateur de signal (3) pour notifier des signaux d'alarme et/ou de mise en garde, et
une paire de lunettes de sécurité (4) pour la protection des yeux d'un opérateur (7),
le système étant tel
que la paire de lunettes de sécurité (4) comporte un système de visualisation (44a, 44b), qui est notamment réalisé sous la forme d'un casque de visualisation ou d'une visualisation virtuelle sur la rétine ou d'un projecteur, et
que l'appareil de commande de service (2) et la paire de lunettes de sécurité (4), et optionnellement l'indicateur de signal (3), comprennent respectivement un transmetteur de données (24, 34, 50) pour l'échange d'informations-machine, et/ou de signaux d'alarme et/ou de mise en garde.

2. Système de commande de service (1) pour une machine de traitement de boissons (6) selon la revendication 1, dans lequel la paire de lunettes de sécurité (4) comprend une unité d'écoute et de communication vocale (46a, 46b, 47a, 47b), qui est notamment reliée au transmetteur de données de la paire de lunettes de sécurité (4) pour la transmission d'information vocale.

3. Système de commande de service (1) pour une machine de traitement de boissons (6) selon la revendication 1 ou la revendication 2, dans lequel la paire de lunettes de sécurité (4) comporte un dispositif de protection auditive (52a, 52b) pour l'atténuation de bruits environnants parasites, qui fonctionne notamment par une atténuation de bruit active.

4. Système de commande de service (1) pour une machine de traitement de boissons (6) selon les revendications 1 et 2, dans lequel l'unité d'écoute et de communication vocale (46a, 46b, 47a, 47b) est intégrée au dispositif de protection auditive (52a, 52b) .

5. Système de commande de service (1) pour une machine de traitement de boissons (6) selon l'une au moins des revendications précédentes, dans lequel la paire de lunettes de sécurité (4) comprend une première caméra (48) pour assurer une prise de vue d'objets se trouvant dans le champ de vision de l'opérateur (7).

6. Système de commande de service (1) pour une machine de traitement de boissons (6) selon l'une au moins des revendications précédentes, le système de commande de service (1) comprenant une unité de reconnaissance de gestes (25), pour traiter et convertir des gestes de l'opérateur (7) en commandes-machine.

7. Système de commande de service (1) pour une machine de traitement de boissons (6) selon l'une au moins des revendications précédentes, le système de commande de service (1) comprenant un système de localisation (49) pour relever la position et/ou l'orientation de la paire de lunettes de sécurité (4), qui est agencé, notamment au moins en partie, sur la paire de lunettes de sécurité (4).

8. Système de commande de service (1) pour une machine de traitement de boissons (6) selon l'une au moins des revendications précédentes, dans lequel la paire de lunettes de sécurité (4) comprend une deuxième caméra (45), qui est conçue pour assurer une prise de vue d'au moins un oeil de l'opérateur.

9. Système de commande de service (1) pour une machine de traitement de boissons (6) selon l'une au moins des revendications précédentes, le système de commande de service (1) comprenant une unité de reconnaissance biométrique (26) en vue d'identifier l'opérateur (7) pour l'établissement d'une autorisation d'accès, système dans lequel l'unité de reconnaissance biométrique (26) est notamment conçue pour traiter des données d'image en provenance de l'oeil de l'opérateur.

10. Système de commande de service (1) pour une machine de traitement de boissons (6) selon l'une au moins des revendications précédentes, dans lequel l'indicateur de signal (3) est placé sur le corps de l'opérateur (7) et/ou sur la paire de lunettes de sécurité (4).

11. Système de commande de service (1) pour une machine de traitement de boissons (6) selon l'une au moins des revendications précédentes, dans lequel le système de visualisation (44a, 44b) est conçu pour représenter une image différente sur chaque oeil de l'opérateur (7), notamment pour visualiser des informations en 3D.

12. Système de commande de service (1) pour une machine de traitement de boissons (6) selon l'une au moins des revendications précédentes, dans lequel le système de visualisation (44a, 44b) est conçu pour visualiser des appareils virtuels pour l'opérateur (7).

13. Système de commande de service (1) pour une machine de traitement de boissons (6) selon l'une au moins des revendications précédentes, le système de commande de service (1) comprenant une caméra séparée et le système de visualisation (44a, 44b) étant conçu pour représenter l'image de la caméra séparée, à l'appel ou à la demande de l'opérateur (7).
